# EUROPÄISCHE PATENTSCHRIFT

(11) **EP 2 435 373 B1**
(45) Veröffentlichungstag und Bekanntmachung des Hinweises auf die Patenterteilung: **18.03.2015**
(21) Anmeldenummer: 10728116.4
(22) Anmeldetag: 28.05.2010
(51) Int. Cl.: C02F 1/50, C02F 103/00

(54) **VERFAHREN UND VORRICHTUNG ZUR BEHANDLUNG VON BALLASTWASSER MIT ACROLEIN**
APPARATUS AND DEVICE FOR TREATING BALLAST WATER WITH ACROLEIN
PROCÉDÉ ET DISPOSITIF POUR TRAITER DES EAUX DE BALLAST AVEC DE L'ACROLÉINE

(30) Priorität: 29.05.2009 DE 102009023314; 29.05.2009 DE 202009007693 U; 29.05.2009 DE 202009007694 U; 29.05.2009 DE 202009007686 U
(43) Veröffentlichungstag der Anmeldung: 04.04.2012
(60) Teilanmeldung: 14178185.6
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB
(86) Internationale Anmeldenummer: PCT/EP2010/003286
(87) Internationale Veröffentlichungsnummer: WO 2010/136220

(56) Entgegenhaltungen:
- DE-A1- 19 935 912

## Beschreibung

Die Erfindung betrifft ein Verfahren und eine Vorrichtung zur Behandlung von Ballastwasser mit Acrolein.

Es ist bereits bekannt, dass Ballastwasser auf Schiffen desinfiziert werden kann durch den Einsatz von Acrolein. Schon eine Zugabe von 5 bis 15 ppm Acrolein zum Ballastwasser können Bakterien, Algen, Zebra-Muscheln und anderen Organismen des Zooplanktons abgetötet und damit kann der Transfer von einem Hafen zum anderen sicher unterbunden werden. Der Vorteil des Acroleineinsatzes ist die Nachhaltigkeit insbesondere gegenüber Larven von Zebramuscheln, und die Tatsache, dass das Acrolein sich nach einigen Tagen von selbst abbaut, d.h. beim Ablassen des Ballastwassers im Zielhafen tritt keine erneute Belastung des Hafenbeckens durch dieses Biozid auf.

Diesen Vorteilen steht gegenüber, dass die Handhabung, der Transport und die Lagerung vom reinem Acrolein auf Schiffen nicht durchgeführt werden kann, weil Acrolein eine hochgiftige Flüssigkeit mit Tränengaswirkung darstellt und das Bordpersonal gezwungen wäre, die Handhabung dieses Biozids nur mit vollständiger ABC-Schutzbekleidung und unter Verwendung von Gasmasken durchzuführen.

Wässrige Lösungen von Acrolein sind nicht giftig und lassen sich sicher handhaben, jedoch beträgt die Haltbarkeit dieser Lösungen nur wenige Tage, so dass der Einsatz auf Schiffen wegen der logistischen Probleme unmöglich ist.

Aus DE-GM 20 2007 004 912 ist eine Vorrichtung bekannt, bei der das Ballastwasser mittels einer Druckerhöhungspumpe durch eine Wasserstrahlpumpe gepumpt wird und die Unterdruckzone der Wasserstrahlpumpe hydraulisch über ein Stellventil verbunden ist mit einem Reaktionsgefäß, welches außen angebrachte separate Zulauföffnungen für Acroleinacetal, Säure und Hydrolysewasser aufweist. In dem Reaktionsgefäß wird eine wässrige Acroleinlösung erzeugt, die in der Wasserstrahlpumpe dem Ballastwasser zugemischt wird, sodass die Organismen in dem Ballastwasser durch das Acrolein abgetötet werden. Bei der Vorrichtung nach DE-GM 20 2007 004 912 kann Acroleinacetal direkt eingesetzt werden, ohne dass eine Vormischung mit einem Lösungsmittel erforderlich ist. Das gleiche gilt für die als Katalysator eingesetzte Säure, die ohne vorherige Verdünnung mit Wasser in die Vorrichtung dosiert werden kann. Das Hydrolysewasser wird aus dem Bordwassemetz entnommen. Obwohl mit dieser Verrichtung die Probleme der Handhabung, des Transports und der Lagerung vom reinem Acrolein auf Schiffen gelöst werden, gibt es mit zunehmenden Durchsatzanforderungen Dimensionierungsprobleme insbesondere bei der Wasserstrahlpumpe und bei dem Reaktionsgefäß.

EP 0 639 533 B1 offenbart ein Verfahren und eine Vorrichtung zur Dotierung strömender Gewässer mit Acrolein als Biozid, um eine Veralgung und Verkrautung dieser Gewässer zu vermeiden. Im erfindungsgemässen Verfahren wird ein Acroleinacetal als Biozid-Precursor eingesetzt und in der erfindungsgemässen Vorrichtung deacetalisiert; zum Betreiben der Vorrichtung ist keine elektrische Energie erforderlich. Das Verfahren zur Dotierung strömener Gewässer mit Acrolein, wobei Acrolein ausserhalb des Gewässers durch Deacetalisierung eines Acetals von Acrolein mit einem Alkohol mit 1 bis 4 C-Atomen und 1 bis 3 Hydroxylgruppen in wässriger Phase in Gegenwart einer Mineralsäure gebildet wird, besteht daring, dass man eine 25 bis 95 gew.-%ige Lösung des Acroleinacetals in einem Lösungsmittel und eine 3 bis 30 gew.-%ige wässrige Mineralsäurelösung aus druckfesten Vorratsbehältern durch Anlegen eines Drucks aus einer Druckgasflasche, insbesondere einer N2-Stahlflasche, in eine Mischkammer drückt, wobei das Mischungsverhältnis mittels Dosiervorrichtungen in den Zufuhrleitungen so eingestellt wird, dass das Reaktionsgemisch pro Mol Acroleinacetal mindestens 1 Mol Wasser und zwischen 0,01 und 0,1 Mol Mineralsäure enthält, das in der Mischzone erhaltene Reaktionsgemisch zunächst durch einen rohrförmigen und anschliessend durch einen behälterförmigen Teil eines Deacetalisierungsreaktors leitet, wobei die mittlere Verweilzeit im rohrförmigen Reaktor mindestens 10 Sekunden und im behälterförmigen Reaktor mindestens 2 Minuten beträgt, und das aus dem behälterförmigen Reaktor austretende Reaktionsgemisch in das zu dotierende strömende Gewässer einleitet.

DE 199 35 912 A1 betrifft ein Verfahren zum Dotieren eines flüssigen Mediums mit einem aus mindestens zwei Reaktionskomponenten in situ gebildeten Dotierungsmittel und eine Vorrichtung hierfür. Erfindungsgemäß erfolgen die Bildung des Dotierungsmittels und die Dotierung parallel nebeneinander, indem die Reaktionskomponenten in einen rohr- oder schlauchförmigen, innerhalb eines ersten Reaktors angeordneten zweiten Reaktor eingespeist werden und das beim Durchströmen des zweiten Reaktors gebildete Dotierungsmittel in den zweiten Reaktor eindosiert wird. Das Verfahren und die Vorrichtung sollen sich insbesondere zur Herstellung und gleichzeitigen Verwendung von Peroxyameisensäure enthaltenden Dotierungsmitteln eignen.

Es ist Aufgabe der Erfindung, eine im Aufbau einfache Vorrichtung und ein Verfahren bereit zu stellen, wobei das Ballastwasser an Bord von Schiffen auch bei großen Durchsatzmengen mit vertretbarem Bauaufwand mit Acrolein behandelt werden kann.

Zur Lösung der Aufgabe umfasst die erfindungsgemäße Vorrichtung zur Behandlung von Ballastwasser mit Acrolein gemäß Anspruch 1 und ein Verfahren zur Behandlung von Ballastwasser mit Acrolein gemäß Anspruch 5.

Eine vorteilhafte Ausgestaltung der erfindungsgemäßen Vorrichtung ist dadurch gekennzeichnet, dass die Reaktoreinrichtung einen Generator mit wenigstens einem Anschlussstutzen für Acroleinderivet und einem Anschlussstutzen für Reinwasser und einem Auslassstutzen für eine Acroleinlösung umfasst, wobei der Generator zur vorläufigen Mischung des Acroleinderivats mit Wasser ausgelegt ist, und einen Schlauchreaktor, der einen über eine Leitung mit dem Auslassstutzen des Generators verbunden Einlassstutzen und einen Auslassstutzen zur Weiterleitung der behandelten Acroleinlösung aufweist und dessen Volumen ausgelegt ist, um eine Verweilzeit der Acroleinlösung in dem Schlauchreaktor bereit zu stellen, in der die Lösung des Acroleinderivats in Wasser abgeschlossen wird. Nachdem der Generator gewöhnlich auf Deck installiert ist, während der Schlauch des Schlauchreaktors von Deck bis zum Ballastwassertank führt, bietet der Schlauchreaktor genügend Volumen für die Aufnahme der erforderlichen Menge an Hydrolysewasser und Acroleinderivat und auch eine ausreichende Verweilzeit dieser Mischung in dem Generator und den Schlauchreaktor, damit am Ausgang des Schlauchreaktors eine Acroleinlösung zur Verfügung steht, bei der die Hydrolyse des Acroleinderivats in dem Wasser angeschlossen ist.

Eine vorteilhafte Ausgestaltung der erfindungsgemäßen Vorrichtung ist dadurch gekennzeichnet, dass die Mischeinrichtung umfasst eine Mischdüse mit einem sich in Strömungsrichtung verengenden Einlasskonus, der einen Zuleitungsstutzen für den Anschluss einer Druckwasserleitung hat, mit einem sich in Strömungsrichtung erweiternden Auslasskonus, der einen Abflussstutzen für den Anschluss einer Zufuhrleitung zur Zufuhr der wässrigen Acroleinlösung von der Mischeinrichtung zu einem Bestimmungsort hat, sowie mit wenigstens einen in einen Unterdruckbereich der Mischdüse mündenden Saugstutzen, der mit einer Acroleinlösungs-Zufuhrleitung von einer Reaktoreinrichtung zur Erzeugung einer wässrigen Acroleinlösung verbunden ist, und eine Druckerhöhungspumpe, die stromauf von der Mischdüse angeordnet und mit einer Ballastwasser-Zweigleitung verbunden ist, die eine Zweigleitung von eine Hauptballastwasserleitung für einen Teilstrom des Ballastwassers ist, wobei die Leistung der Druckerhöhungspumpe in Abhängigkeit von der Verengung des Einlasskonus der Mischdüse so dimensioniert ist, dass bei Nennleistung der Druckerhöhungspumpe in dem Bereich der Mischdüse zwischen dem Einlasskonus und dem Auslasskonus eine Wasser-Strömungsgeschwindigkeit von 20 bis 25 m/sec zu erreichen ist.

Eine vorteilhafte Ausgestaltung der erfindungsgemäßen Vorrichtung ist dadurch gekennzeichnet, dass die Zufuhreinrichtung eine Ringdüse aufweist, die zum Einsatz in die Hauptballastwasserleitung ausgelegt ist, wobei die Ringdüse einen Düsenring aufweist, der eine Vielzahl von über einen Innenumfang des Düsenrings verteile Düsenöffnungen aufweist.

Durch das Verfahren nach der Erfindung kann das Ballastwasser an Bord von Schiffen auch bei großen Durchsatzmengen mit vertretbarem Bauaufwand mit Acrolein behandelt werden, wobei trotz der großen Durchsatzmengen in der Hauptballastwasserleitung das Acrolein in einer verhältnismäßig klein bauenden Anlage erzeugt und in ausreichender Menge dem Hauptballastwasserstrom zugeführt werden kann.

Durch das erfindungsgemäße Verfahren wird bei großen Durchsatzmengen in der Hauptballastwasserleitung von bis zu 5000 m³/h erreicht, dass das Acrolein dennoch in einer verhältnismäßig klein bauenden Anlage erzeugt und in ausreichender Menge dem Hauptballastwasserstrom zugeführt werden kann. Auch das Problem der ausreichenden Wasserversorgung der Anlage zum Abmischen der Acroleinlösung wird vorteilhaft durch die Verwendung eines Teils des Hauptballastwasserstroms gelöst.

Eine vorteilhafte Ausgestaltung des erfindungsgemäßen Verfahrenes ist dadurch gekennzeichnet, dass der Reaktoreinrichtung zur Erzeugung einer wässrigen Acroleinlösung zusätzlich ein Spaltkatalysator zugeführt wird, um die Hydrolyse des Acroleinderivats zu beschleunigen, was sich vorteilhaft auf die Länge der erforderlichen Verweilzeit der Acroleinlösung in der Reaktoreinrichtung auswirkt.

Eine weitere vorteilhafte Ausgestaltung des erfindungsgemäßen Verfahrenes ist dadurch gekennzeichnet, dass dem Ballastwasser-Teilstrom zusätzlich ein Zersetzungsbeschleuniger zugeführt wird, was sich in vorteilhafter weise dahingehen auswirkt, dass eventuell noch vorhandene Reste der Acroleinderivats auflösen, bevor der Ballastwasser-Teilsrom dem Hauptballastwasserstrom zugemischt wird.

Eine weitere vorteilhafte Ausgestaltung des erfindungsgemäßen Verfahrenes ist dadurch gekennzeichnet, dass eine Ballastwasser-Teilstrom von etwa 10% von dem Hauptballastwasserstrom abgezweigt wird, was einerseits für die Wasserversorgung der Anlage ausreichend ist und andererseits den Bauumfang der Anlage in Grenzen hält.

Eine weitere vorteilhafte Ausgestaltung des erfindungsgemäßen Verfahrenes ist dadurch gekennzeichnet, dass, wenn der Nenngehalt des Acroleins in dem mit Acrolein behandelte Hauptballastwasserstrom eine Konzentration von etwa 5 bis 15 ppm Acrolein beträgt und der Ballastwasser-Teilstrom 10 % des Hauptballastwasserstroms ist, das Verhältnis von ein Acroleinderivat und Hydrolysewasser an der Reaktoreinrichtung so gewählt wird, dass die aus der Reaktoreinrichtung austretende Acrolienlösung eine Konzentration von 150000 ppm Acrolein hat, und dass der Ballastwasser-Teilstrom nach dem Mischen mit der Acroleinlösung eine Konzentration von 50 bis 150 ppm Acrolein hat. Für höhere oder niedrigere Konzentrationen des Acroleins in dem Hauptballastwasserstrom kann diese Bemessungsvorschrift entsprechend angewandt werden.

Eine weitere vorteilhafte Ausgestaltung des erfindungsgemäßen Verfahrenes ist dadurch gekennzeichnet, dass die aus der Reaktoreinrichtung austretende Acroleinlösung bei der Mischung mit dem Ballastwasser-Teilstrom im Verhältnis von etwa 1:500 bis 1:1000 durch den Ballastwasser-Teilstrom verdünnt wird, und dass der mit Acrolein behandelte Ballastwasser-Teilstrom im Verhältnis von etwa 1:5 bis 1:10 durch den Hauptballastwasserstrom verdünnt wird, wenn der Nenngehalt des Acrtoleins in dem mit Acrolein behandelten Ballastwasserstroms etwa 5 bis 15 ppm Acrolein beträgt und der Ballastwasser-Teilstrom 10 % des Hauptballastwasserstroms ist. Es findet somit eine dreistufige Verdünnung des Acroleins statt: eine erste Verdünnung in der Reaktoreinrichtung durch das Hydrolysewasser auf eine 5 bis 15 %ige Acroleinlösung, ein zweite Verdünnung beim Abmischen der von der Reaktoreinrichtung kommenden Acroleinlösung, und eine dritte Verdünnung beim Eintreten des mit Acrolein behandelte Ballastwasser-Teilstroms in den Hauptballastwasserstrom. Dadurch wird eine gute Verfahrensökonomie erreicht.

Eine weitere vorteilhafte Ausgestaltung des erfindungsgemäßen Verfahrenes ist dadurch gekennzeichnet, dass zur Mischung des Ballastwasser-Teilstrom und der Acroleinlösung eine durch den Ballastwasser-Teilstrom betriebene Mischdüse vom Typ eine Wasserstrahlpumpe verwendet wird, deren Unterdruckzone die Acroleinlösung und ggf. der Zersetzungsbeschleuniger zugeführt wird/werden. Dadurch lässt sich eine gute Durchmischung der Acroleinlösung mit dem Ballastwasser-Teilstrom erreichen.

Eine weitere vorteilhafte Ausgestaltung des erfindungsgemäßen Verfahrenes ist dadurch gekennzeichnet, dass der Druck und die Strömungsgeschwindigkeit des Ballastwasser-Teilstroms so gewählt wird, dass in der Mischdüse eine Wasser-Strömungsgeschwindigkeit von 20 bis 25 m/sec erreicht wird. Die Wasser-Strömungsgeschwindigkeit von 20 bis 25 m/sec in der Mischdüse ist ausreichend, um die Akroleinlösung aus der Reaktoreinrichtung und den Zersetzungsbeschleuniger anzusaugen, und sie gewährleistet eine sofortige Durchmischung der zugeführten Medien in Millisekunden, was für die Stabilisierung des Acroleins wichtig ist.

Eine weitere vorteilhafte Ausgestaltung des erfindungsgemäßen Verfahrenes ist dadurch gekennzeichnet, dass eine Druckerhöhungspumpe einer Nennleistung von 45 kW zur Erhöhung des Drucks in dem Ballastwasser-Teilstrom verwendet wird, wenn ein Durchsatz von 500 m³/h und eine Strömungsgeschwindigkeit von 2 bis 3 m/sec in dem Ballastwasser-Teilstrom vorgegeben sind, um eine Wasser-Strömungsgeschwindigkeit von 20 bis 25 m/sec in der Mischdüse zu erreichen. Diese Dimensionierungsregel kann entsprechend auf andere Durchsatzmengen angewendet werden.

Ausführungsbeispiele der Erfindung werden an Hand der beigefügten Zeichnungen erläutert, in denen
- Fig. 1: schematisch ein erstes Ausführungsbeispiel der gesamten Vorrichtung zeigt,
- Fig. 2: schematisch die Ringdüse in der Seitenansicht zeigt,
- Fig. 3: schematisch die in eine Ballastwasserrohrleitung eingesetzte Ringdüse zusammen mit der Mischblende zeigt,
- Fig. 4: eine perspektivische Ansicht der Ringdüse mit einer tangential angesetzten Injektorleitung zeigt,
- Fig. 5: eine Vorderansicht der Mischblende MB mit quadratischer Durchtrittsöffnung zeigt, und
- Fig. 6: eine Schnittdarstellung einer Mischdüse.

Fig.1 zeigt schematisch eine Vorrichtung zur Behandlung von Ballastwasser mit Acrolein, bei der der erfindungsgemäße Reaktor, die erfindungsgemäße Mischeinrichtung und die erfindungsgemäße Zufuhreinrichtung eingesetzt sind. Es ist zu beachten, dass der erfindungsgemäße Reaktor, die erfindungsgemäße Mischeinrichtung und die erfindungsgemäße Zufuhreinrichtung auch unabhängig von der in Fig. 1 gezeigten Gesamtanlage eingesetzt werden können.

Wie aus Fig.1 zu ersehen ist, fließt der Hauptballastwasserstrom (Volumen/Zeiteinheit) BW des mit Acrolein zu behandelnden Ballastwassers durch die Hauptballastwasserleitung 2 zu einer Zufuhreinrichtung, die eine Ringdüse 4 mit einem Düsenring aufweist, an dessen Innenseite wenigstens eine Düsenöffnung 6, vorzugsweise eine Vielzahl von unter gleichen Abständen angeordnete Düsenöffnungen 6, vorgesehen sind.

Ferner umfasst die Zufuhreinrichtung eine Strömungs-Störeinrichtung, die in Richtung des Hauptballastwasserstroms stromab von der Ringdüse 4 liegt. Die Strömungs-Störeinrichtung kann eine Verengung, eine Strömungsleiteinrichtung oder ein sonstiges Hindernis sein, wodurch der von der Ringdüse kommende Hauptballastwasserstrom verwirbelt und damit vermischt wird. Eine bevorzugte Form der Strömungs-Störeinrichtung ist eine in Fig. 1 gezeigt Mischblende 8, durch die das aus der Ringdüse 4 austretende Ballastwasser strömt. Durch die Mischblende 8 wird der freie Querschnitt der Hauptballastwasserleitung 2 verengt, und es wird ein hydraulischer Überdruck vor der Blende 8 erzeugt, der zu einer Turbulenz in der Ballastwasserströmung führt, die zu der schnellen und guten Durchmischung des Hauptballastwasserstroms BW mit einem mit Acrolein vorbehandelten Ballastwasser führt.

Durch die Düsenöffnungen 6 fließt gleichzeitig ein Strom (Volumen/Zeiteinheit) BA von mit Acrolein behandeltem Wasser radial nach innen und trifft auf den Hauptballastwasserstrom BW. Die vollständige momentane Vermischung des Hauptballastwasserstroms BW und des mit Acrolein vorbehandelten Wasserstroms BA mittels der Mischblende 8 liefert als Summe den Ballastwasserabfluss BWB.

Die Vorrichtung umfasst ferner eine Zweigleitung 10, die stromab von eine Ballastwasser-Speisepumpe (nicht gezeigt), durch die Ballastwasser in die Ballastwassertanks des Schiffes eingespeist wird, und stromauf von der Zufuhreinrichtung von der Hauptballastwasserleitung 2 abzweigt und durch die der Ballastwasser-Behandlungsvorrichtung ein Ballastwasser-Teilstrom BT zugeführt wird. Die Zweigleitung 10 führt zu einer Trenneinrichtung 12, die zur physikalischen Abtrennung des Schlammanteils bzw. von suspendierten Feststoffen des Ballastwasser-Teilstroms BT dient. Ein Regelventil 14 ist in der Zweigleitung 10 vorgesehen, um die Menge des in die Trenneinrichtung 12 eintretenden Ballastwasser-Teilstroms BT einzustellen. Ein in der Trenneinrichtung 12 abgetrennter Schlammwasserstrom BZ verlässt die Trenneinrichtung 12 über eine Austrittsleitung 16. Die Trenneinrichtung 12 führt eine physikalische Abtrennung von suspendierten Feststoffen aus dem Ballastwassers-Teilstrom BT mittels Zentrifugalkraft und/oder Filtration durch.

Der vermittels der Trenneinrichtung 12 vorher physikalisch gereinigte Ballastwasser-Teilstrom BV fließt durch eine Klarwasserleitung 18 zu einem Saugstutzen einer Druckerhöhungspumpe 20. Von der Druckerhöhungspumpe 20 führt eine Druckwasserleitung 22 zu einer Mischdüse 24, um den aus der Druckerhöhungspumpe 20 austretenden, vorher physikalisch gereinigten Wasser-Teilstrom BV einem Zuflussstutzen 26 der Mischdüse 24 zuzuführen, in welcher der Wasser-Teilstrom BV mit wässriger Acroleinlösung gemischt und so verdünnt wird, dass die Acroleinlösung über einen Zeitraum von einigen Tagen stabil bleibt bzw. dass sich das Acrolein in der Acroleinlösung nicht zersetzt.

Die Mischdüse 32 ist als Wasserstrahlpumpe mit einem Düsenbereich mit hydraulischem Unterdruck ausgebildet. Die Mischdüse 24 hat ferner einen Abflussstutzen 28, der über eine Leitung 29 mit der Ringdüse 4 verbunden ist, und zwei Vakuum-Stutzen 30, 32.

Die Leistung der Druckerhöhungspumpe 20 ist in Abhängigkeit von der Verengung des Einlasskonus der Mischdüse so dimensioniert ist, dass bei Nennleistung der Druckerhöhungspumpe in dem Bereich der Mischdüse zwischen dem Einlasskonus und dem Auslasskonus eine Wasser-Strömungsgeschwindigkeit von 20 bis 25 m/sec zu erreichen ist. Die Druckerhöhungspumpe 20 ist auf eine Leistung von 45 kW bei einem Durchsatz von 500 m³/h und einer Strömungsgeschwindigkeit von 2 bis 3 m/sec in einer Zuflussleitung und einer Abflussleitung der Druckerhöhungspumpe ausgelegt.

Die Mischdüse 24 hat ferner einen Abflussstutzen 28, der über eine Leitung 29 mit der Ringdüse 4 verbunden ist, und zwei Saugstutzen 30, 32. Die Druckerhöhungspumpe 20 ist so ausgelegt, dass über der Mischdüse 24, die als Wasserstrahlpumpe ausgebildet, eine Druckdifferenz von etwas 1 bis 1,5 bar zwischen dem Druck in dem Zuflussstutzen 26 der Mischdüse 24 und dem Druck in dem Abflussstutzen 28 der Mischdüse 24 erzeugt wird, sodass ein Unterdruckbereich in der Mischdüse entsteht, durch den die die Acroleinlösung angesaugt wird.

Das Volumen des Wasser-Teilstroms BV ist nahezu gleich der Differenz des von der Pumpe angesaugten Volumens des Wasser-Teilstroms BT minus dem Volumen des von der Trenneinrichtung 12 zur physikalischen Abtrennung von Feststoffen abgeschiedenen Schlammwasserstroms BZ.

Der eine Vakuum-Stutzen 30 ist über eine Leitung 34 mit einem Schlauchreaktor 36 verbunden, der einen Abflussstutzen 38 und einen Zuflussstutzen 40 aufweist. Der Zuflussstutzen 40 des Schlauchreaktors 36 ist über eine Leitung 42 mit einem Abflussstutzen 44 eines Generators 46 verbunden, der einen Akrolein-Zuflussstutzen 48, einen Spaltkatalysator-Zuflussstutzen 50 and einen Wasser-Zuflussstutzen 52 aufweist.

Über den Akrolein-Zuflussstutzen 48 wird dem Generator 46 in Abhängigkeit vom dem Volumen des Wasser-Teilstroms BT ein Volumenstrom A eines Acroleinderivates, beispielsweise Acroleinacetal, zugeführt. Über den Spaltkatalysator-Zuflussstutzen 50 wird dem Generator 46 in Abhängigkeit von dem Volumenstrom A ein Volumenstrom K eines Spaltkatalysators zugeführt. Über den Wasser-Zuflussstutzen 52 wird dem Generator 46 in Abhängigkeit vom Volumenstrom A ein Wasserstrom W zugeführt. In einer an den Wasser-Zuflussstutzen 52 angeschlossenen Leitung 54 ist ein Ventil 56 zur Steuerung des Wasserzuflusses vorgesehen.

Von dem Wasser-Zuflussstutzen 52 führt eine Zweigleitung 58 zu der Druckwasserleitung 22 und endet dort zwischen der Pumpe 20 und der Mischdüse 24. Wenn das Ventil 56 in der Leitung 54 geöffnet und das Ventil 60 in der Leitung 58 geschlossen ist, erfolgt die Wasserzufuhr von einer (nicht gezeigten) Reinwasserquelle. Alternativ kann der Generator 46 auch statt mit dem Wasserstrom W über die Leitung 58 mit einem Teilstrom des Wasser-Teilstroms BV betrieben werden. Dazu wird das Ventil 56 geschlossen und das Ventil 60 geöffnet.

Die im Generator 46 durch Zusammenwirken von Wasser W , Spaltkatalysator K und Acroleinderivat A erzeugte, wässrige Acroleinlösung strömt aus dem Abflussstutzen 44 des Generators 46 in den Zuflussstutzen 40 des Schlauchreaktors 36, wo die Reaktion der Reaktionsbestandteile zu Ende geführt wird. Von dem Abflussstutzen 38 des Schlauchreaktors 46 fließt die wässrige Acroleinlösung durch die Leitung 34 in den Vakuum-Stutzen 30 der Mischdüse 32.

In der Mischdüse 24 trifft der Volumenstrom der bei dem Vakuum-Stutzen 30 zugeführten wässrigen Acroleinlösung mit dem durch den Anschlussstutzen 26 zugeführten, vorher physikalisch gereinigten Wasser-Teilstrom BV zusammen.

Der in der Mischdüse 24 entstehende Acroleinhaltige Wasserstrom verlässt die Mischdüse 24 durch den Austrittsstutzen 28 und gelangt über die Leitung 29 in die Ringdüse 4, wo die Vermischung mit dem Hauptballastwasserstrom BW erfolgt.

Mit dem Vakuum-Stutzen 32 ist über eine Leitung 62 ein Tank 64 für Zersetzungsbeschleuniger verbunden. In der Leitung 62 sind eine Pumpe 66 und ein Absperrventil 68 in dieser Reihefolge zwischen dem Tank 64 und Vakuum-Stutzen 32 vorgesehen. Der Tank 64 ist durch die Leitung 63 mit dem Saugstutzen einer Pumpe 66 hydraulisch verbunden. An dem Druckstutzen der Pumpe 66 ist der Zuflussflansch des Absperrventils 68 angebracht. Der Abflussflansch des Absperrventils 68 ist mit dem Flansch des Vakuum-Stutzens 32 der Mischdüse 24 verbunden. Somit kann aus dem Tank 64 bei Bedarf mittels der Pumpe 66 über das Ventil 68 durch die Leitung 62 Zersetzungsbeschleuniger zu dem Vakuum - Stutzen 32 zudosiert werden.

Die Wasserversorgung für die Mischdüse 24 und den Generator 46 kann von einer separaten Wasserquelle, beispielsweise von einem Brauchwassertank des Schiffes erfolgen, der direkt mit der Druckerhöhungspumpe 20 verbunden ist.

Wie aus Fig. 2 ersichtlich ist, besteht der Düsenring der Ringdüse 4 aus einem inneren Rohrabschnitt 70, der auf seinem Umfang mit mehreren Düsenöffnungen 6 versehen ist, sowie einem äußerem Rohrabschnitt 72 und zwei Flanschringen 74 und 76 gebildet ist. Die Flanschringe 74 und 76 sind zwischen dem inneren Rohrabschnitt 70 und dem äußeren Rohabschnitt 72 flüssigkeitsdicht eingeschweißt. In die Flanschringe 74 und 76 sind Stehbolzen 78 eingesetzt, die Gewinde haben, damit mit Hilfe von Muttern 79 (Fig. 4) ein leichter Einbau in bestehende Ballastwasserleitungen erfolgen kann.

Wie aus Fig. 3 ersichtlich ist, ist die Ringdüse 4 durch die Stehbolzen 78 und die Muttern 79 direkt an Anschlussflanschen 80, 82 der Hauptballastwasserleitung 2 so angeschlossen, dass die Mischblende 8 in Flussrichtung des Hauptballastwasserstroms BW hinter den Düsenöffnungen liegt. Zwischen der Ringdüse 4 und den Anschlussflanschen 80, 82 sind Flachdichtungen 84, 86 vorgesehen. Zwischen der Ringdüse 4 und dem Anschlussflansch 80 der Hauptballastwasserleitung 2 ist die Mischblende 8 angeordnet und über zwei Flachdichtungen 88, 90 abgedichtet. Die Mischblende 8 wird beim Anziehen der Muttern 79 an den Stehbolzen 78 einfach eingeklemmt. Somit ergibt sich ein einfacher Anschluss der Ringdüse 4 in die auf dem Schiff vorhandenen Ballastwasserleitungen.

Fig. 4 zeigt die perspektivische Darstellung der Ringdüse 4 und die am äußeren Rohrmantel 72 tangential angesetzte Leitung 29, die als Injektorleitung ausgebildet ist. Der Acroleinhaltigen Wasserstrom, der die Mischdüse 24 verlässt, steht unter einem Druck von etwa 1 bis 1,5 bar, sodass durch den von der Mischdüse 24 kommenden Acroleinhaltigen Strom, der unter Druck tangential über die Leitung 29 in den Düsenring der Ringdüse 4 eingeleitet oder injiziert wird, wobei eine Ringströmung erzeugt wird, die dafür sorgt, dass etwa die gleiche Menge an Acroleinlöung aus den einzelnen Düsenöffnungen 6 austritt. Damit erfolgt eine gleichmäßige Zufuhr von Acroleinlösung in den Hauptballastwasserstrom BW. Die stromab liegende Strömungs- Störeinrichtung sorgt dann für die Verwirbelung bzw. Vermischung der Acroleinlösung mit dem Hauptballastwasserstrom BW.

Der Fig. 5 zeigt als bevorzugte Form der Strömungs- Störeinrichtung die Mischblende 8, die mit einer nicht kreisförmigen sondern quadratischen Durchtrittsöffnung 92 versehen ist. Dadurch wird die Verwirbelung bzw. Vermischung der Acroleinlösung mit dem Hauptballastwasserstrom gegenüber einer Mischblende mit runder Öffnung weiter verbessert.

Figur 6 zeigt schematisch eine Mischdüse 24. Die Mischdüse 24 umfasst einen Auslasskonus 94 und einen Einlasskonus 96 sowie ein Zwischenstück 98, das zwischen einem Flansch 100 an dem Auslassende des Einlasskonus 96 und einen Flansch 102 am Eintrittsende des Austrittskonus 94 angeordnet ist. Die Flansche 100, 102 und das Zwischenstück 98 sind, wie in Figur 6 dargestellt ist, miteinander durch Schrauben 104 und Muttern 106 verschraubt. Der Einlasskonus 96 weist die Einlassmündung 26 für Ballastwasser auf, und der Auslasskonus 94 weist die Auslassöffnung 28 auf. Die Saugstutzen 30 und 32 in dem Zwischenstück 98 dienen zum Anschluss der Leitung 34 für Acroleinlösung bzw. der Leitung 62 für Zersetzungsbeschleuniger.

Wie in Figur 6 gezeigt ist, hat der Einlasskonus 96 einen Öffnungswinkel von 20°, und der Auslasskonus 94 hat einen Öffnungswinkel von 10°. Der Einlasskonus 96 der Mischdüse 24 hat ein Durchmesserverhältnis in Strömungsrichtung S von Einlass zu Auslass, das heißt eine Verengung des Durchtrittsquerschnitts, von etwa 2:1 und der Auslasskonus hat ein Durchmesserverhältnis in Strömungsrichtung S vom Einlass zum Auslass, das heißt eine Erweiterung der Durchtrittsfläche, von etwa 1:2. Der Durchmesser des Einlasskonus 96 an seinem Einlass 26 und der Durchmesser des Auslasskonus 94 an seinem Auslass 28 ist gleich groß wie der Durchmesser der angeschlossenen Rohrleitung für Ballastwasser. Wenn die Druckerhöhungspumpe 20 auf 45 kW ausgelegt ist, wird, wenn die Druckerhöhungspumpe 20 bei ihrer Nennleistung arbeitet, bei einem Durchschnitt von 500 m³/h und einer Strömungsgeschwindigkeit von 2 bis 3 m/sec die erforderliche Strömungsgeschwindigkeit von 20 bis 25 m/sec am Auslassende des Einlasskonus 96 erreicht.

Der Einlasskonus 94 ist über einen Flansch 98 mit der Zufuhrleitung 29 zu der Ringdüse 4 verbunden. Der Einlassstutzen 96 ist über einen Flansch 110 mit der Leitung 18 für die Zufuhr von Ballastwasser verbunden.

## Patentansprüche

1. Vorrichtung zur Behandlung von Ballastwasser mit Acrolein an Bord von Schiffen, wobei die Vorrichtung einen Anschluss an eine Hauptballastwasserleitung (2) einer Ballastwassereinrichtung aufweist, umfassend:
eine Reaktoreinrichtung mit einem Anschluss (48) für Acroleinderivat, einem Anschluss (50) für Katalysatorsäure und einem Anschluss (52) für Wasser zur Erzeugung einer wässrigen Acroleinlösung,
eine Abzweigungsleitung (10) bei der Hauptballastwasserleitung (2), die mit der Hauptballastwasserleitung (2) zur Abzweigung eines Ballastwasser-Teilstroms und zur Rückführung des abgezweigten Ballastwasser-Teilstroms verbunden ist,
eine mit der Abzweigungsleitung (10) verbundene Mischinrichtung (24) zur Verdünnung der von der Reaktoreinrichtung erzeugten, wässrigen Acroleinlösung;
eine Acroleinlösung-Zufuhrleitung (34, 42) von der Reaktoreinrichtung an Deck des Schiffes zu der Mischeinrichtung (24) in der Abzweigungsleitung (10) bei der Hauptballastwasserleitung (2), und
eine Zufuhreinrichtung (4) in der Hauptballastwasserleitung (2) zur Zufuhr der wässrigen Acroleinlösung von der Mischeinrichtung (24) zu der Hauptballastwasserleitung (2).

2. Vorrichtung nach Anspruch 1, **dadurch gekennzeichnet, dass** die Reaktoreinrichtung einen Generator (46) mit wenigstens einem Anschlussstutzen (48) für Acroleinderivet und einem Anschlussstutzen (52) für Reinwasser und einem Auslassstutzen (44) für eine Acroleinlösung umfasst, wobei der Generator (46) zur vorläufigen Mischung des Acroleinderivats mit Wasser ausgelegt ist, und einen Schlauchreaktor (36), der einen über eine Leitung mit dem Auslassstutzen des Generators (46) verbunden Einlassstutzen und einen Auslassstutzen zur Weiterleitung der behandelten Acroleinlösung aufweist und dessen Volumen ausgelegt ist, um eine Verweilzeit der Acroleinlösung in dem Schlauchreaktor (36) bereit zu stellen, in der die Lösung des Acroleinderivats in Wasser abgeschlossen wird.

3. Vorrichtung nach Anspruch 1, **dadurch gekennzeichnet, dass** die Mischeinrichtung umfasst: eine Mischdüse (24) mit einem sich in Strömungsrichtung verengenden Einlasskonus (96), der einen Zuleitungsstutzen für den Anschluss einer Druckwasserleitung (22) hat, mit einem sich in Strömungsrichtung erweiternden Auslasskonus (94), der einen Abflussstutzen für den Anschluss einer Zufuhrleitung (29) zur Zufuhr der wässrigen Acroleinlösung von der Mischeinrichtung zu einem Bestimmungsort hat, sowie mit wenigstens einen in einen Unterdruckbereich der Mischdüse (24) mündenden Saugstutzen (30), der mit einer Acroleinlösungs-Zufuhrleitung (34) von einer Reaktoreinrichtung (36, 46) zur Erzeugung einer wässrigen Acroleinlösung verbunden ist, und eine Druckerhöhungspumpe (20), die stromauf von der Mischdüse (24) angeordnet und mit einer Ballastwasser-Zweigleitung (14, 18) verbunden ist, die eine Zweigleitung von eine Hauptballastwasserleitung (2) (2) für einen Teilstrom des Ballastwassers ist, wobei die Leistung der Druckerhöhungspumpe (30) in Abhängigkeit von der Verengung des Einlasskonus (96) der Mischdüse (24) so dimensioniert ist, dass bei Nennleistung der Druckerhöhungspumpe (20) in dem Bereich der Mischdüse (24) zwischen dem Einlasskonus (96) und dem Auslasskonus (94) eine Wasser-Strömungsgeschwindigkeit von 20 bis 25 m/sec zu erreichen ist.

4. Vorrichtung nach Anspruch 1, **dadurch gekennzeichnet, dass** die Zufuhreinrichtung eine Ringdüse (4) aufweist, die zum Einsatz in die Hauptballastwasserleitung (2) (2) ausgelegt ist, wobei die Ringdüse (4) einen Düsenring aufweist, der eine Vielzahl von über einen Innenumfang des Düsenrings verteile Düsenöffnungen (6) aufweist.

5. Verfahren zur Behandlung von Ballastwasser mit Acrolein an Bord von Schiffen, wobei ein Acroleinderivat, Katalysatorsäure und Hydrolysewasser in einer Reaktoreinrichtung zur Erzeugung einer wässrigen Acroleinlösung gemischt werden,
ein von einem Hauptballastwasserstrom an einer Abzweigstelle abgezweigter Ballastwasser-Teilstrom mit der in der Reaktoreinrichtung erzeugten, wässrigen Acroleinlösung gemischt und dabei verdünnt wird,
wobei die in der Reaktoreinrichtung erzeugte, wässrige Acroleinlösung über eine Acroleinlösung-Zufuhrleitung von der Reaktoreinrichtung an Deck des Schiffes zu der in der Abzweigleitung vorgesehenen Mischeinrichtung geleitet wird, und wobei
der mit der Acroleinlösung behandelte Ballastwasser-Teilstrom stromab von der Abzweigstelle über die Mischeinrichtung zu dem Hauptballastwasserstrom zurückgeführt wird.

6. Verfahren nach Anspruch 5, **dadurch gekennzeichnet, dass** der Reaktoreinrichtung zur Erzeugung einer wässrigen Acroleinlösung zusätzlich ein Spaltkatalysator zugeführt wird.

7. Verfahren nach Anspruch 5, **dadurch gekennzeichnet, dass** dem Ballastwasser-Teilstrom zusätzlich ein Zersetzungsbeschleuniger zugeführt wird.

8. Verfahren nach Anspruch 5, **dadurch gekennzeichnet, dass** ein Ballastwasser-Teilstrom von etwa 10% von dem Hauptballastwasserstrom abgezweigt wird.

9. Verfahren nach Anspruch 5, **dadurch gekennzeichnet, dass**, wenn der Nenngehalt des Acrtoleins in dem mit Acrolein behandelte Hauptballastwasserstrom eine Konzentration von etwa 15 ppm Acrolein beträgt und der Ballastwasser-Teilstrom 10 % des Hauptballastwasserstroms ist, das Verhältnis von ein Acroleinderivat und Hydrolysewasser an der Reaktoreinrichtung so gewählt wird, dass die aus der Reaktoreinrichtung austretende Acrolienlösung eine Konzentration von 150000 ppm Acrolein hat, und dass der Ballastwasser-Teilstrom nach dem Mischen mit der Acroleinlösung eine Konzentration von 150 ppm Acrolein hat.

10. Verfahren nach Anspruch 5, **dadurch gekennzeichnet, dass** die aus der Reaktöreinrichtung austretende Acroleinlösung bei der Mischung mit dem Ballastwasser-Teilstrom im Verhältnis von etwa 1:500 bis 1:1000 durch den Ballastwasser-Teilstrom verdünnt wird, und dass der mit Acrolein behandelte Ballastwasser-Teilstrom im Verhältnis von etwa 1:5 bis 1:10 durch den Hauptballastwasserstrom verdünnt wird, wenn der Nenngehalt des Acrtoleins in dem mit Acrolein behandelten Ballastwasser etwa 5 bis 15 ppm Acrolein beträgt und der Ballastwasser-Teilstrom 10 % des Hauptballastwasserstroms ist.

11. Verfahren nach Anspruch 5, **dadurch gekennzeichnet, dass** zur Mischung des Ballastwasser-Teilstroms und der Acroleinlösung eine durch den Ballastwasser-Teilstrom betriebene Mischdüse vom Typ eine Wasserstrahlpumpe verwendet wird, deren Unterdruckzone die Acroleinlösung und ggf. der Zersetzungsbeschleuniger zugeführt wird/werden.

12. Verfahren nach Anspruch 5, **dadurch gekennzeichnet, dass** der Druck und die Strömungsgeschwindigkeit des Ballastwasser-Teilstroms so gewählt wird, dass in der Mischdüse eine Wasser-Strömungsgeschwindigkeit von 20 bis 25 m/sec erreicht wird.

## Claims

1. Apparatus for treating ballast water with acrolein on board of ships wherein the apparatus comprises a connection to the main ballast water line (2) of a ballast water installation, comprising:
a reactor device having a connection (48) for an acrolein derivative, a connection (50) for a catalyst acid and a connection (53) for water for generating an aqueous acrolein solution,
a branch line (10) next to the main ballast water line (2) which is connected to the main ballast water line (2) for branching off a ballast water partial stream and for returning the brached off the ballast water partial stream,
a mixing device (24) with is connected to the branch line (10) for diluting the acrolein solution generated by the reactor device;
an acrolein solution supply line (34,42) from the reactor device on deck of the ship to the mixing device (24) in the branch line (10) next to the main ballast water line (2);and
a feed device (4) in the main ballast water line (2) for supplying the aqueous acrolein solution from the mixing device (24) to the main ballast water line (2).

2. Apparatus according to claim 1, **characterized in that** the reactor device comprises a generator (46) having at least a connecting stub (48) for acrolein derivative and a connecting stub (52) for pure water and an outlet stub (44) for acrolein solution wherein the generator (46) is designed for a preliminary mixing of the acrolein derivative with water, and a hose reactor (36) having an inlet stub connected to the outlet stub of the generator (46) by means of a conduit, and an outlet stub for advancing the treated acrolein solution and the volume of which is designed for providing a retention time of the acrolein solution in the hose reactor (36) within which time the solution and the hydrolysis respectively of the acrolein derivative in water is finished.

3. Apparatus according to claim 1, **the characterized in that** the mixing device comprises a mixing nozzle (24) having an inlet cone (96) coming narrower in the flow direction which has an input stub for connecting to a pressure water line (22), an outlet cone (94) widening in the flow direction having an outlet sub for the connection of a line (29) for feeding the aqueous acrolein solution from the mixing device to a destination location, as well as a suction stub (30) leading to the low pressure of the mixing nozzle (24) which is connected to an acrolein solution feeding line (34) from a reactor device (36, 46) for generating an aqueous acrolein solution, and a pressure enlarging pump (20) which is arranged upstream of the mixing nozzle (24) and is connected to a ballast water branch line (18) which is a branch line from the main ballast water line (2) for a partial stream of the ballast water, whereby the power of the pressure elevating pump (20) is dimensioned in relation to the narrowing of the inlet cone (96) of the mixing nozzle (24) such that the nominal power of the pressure elevating pump (20) in the area of the mixing nozzle (24) in between the inlet cone (96) and the outlet cone (94) a speed of the water stream of 20 to 25 m/sec can be achieved.

4. Apparatus according to claim 1, **characterized in that** the feeding device comprises an annular nozzle (4) which is dimensioned for usage in the main ballast water line (2), wherein the annular nozzle (4) comprises a nozzle ring comprising a plurality of nozzle openings (6) distributed over the interior circumference of the nozzle ring.

5. Method or treating for ballast water with acrolein on board of ships, wherein
an acrolein derivative, a catalyst acid and hydrolysis water are mixed in a reactor device for generating an aqueous acrolein solution,
the aqueous acrolein solution generated in the reactor device is mixed and diluted in partial ballast water stream branched off from the main ballast water stream in the main ballast water line by a branch line at a branching location wherein
the aqueous acrolein solution generated in the reactor device is fed from the reactor device on deck of the ship to the mixing device provided in the branch line next to the main ballast water line; and
wherein the partial ballast water stream is fed back through the mixing device to the main ballast water stream downstream of the branching location.

6. Method according to claim 5, **characterized in that** an additional disintegration catalyst is fed to the reactor device for generating an aqueous acrolein solution.

7. Method according to claim 5, **characterized in that** a disintegration accelerator is additionally fed to the partial ballast water stream.

8. Method according to claim 5, **characterized in that** a partial ballast water stream of about 10 % of the main blast water stream is branched off.

9. Method according to claim 5, **characterized in that,** if the nominal content of the acrolein in the acrolein treated main ballast water stream amounts to a concentration of about 15 ppm and the partial ballast water stream is 10 % of the main ballast water stream, the ratio of acrolein derivative and hydrolysis water at the reactor device is selected such that the acrolein solution leaving the reactor device has a concentration of 150000 ppm acrolein, and that the partial ballast water stream after mixing with the acrolein solution has a concentration of 150 ppm acrolein.

10. Method according to claim 5, **characterized in that** the acrolein solution exiting the reactor device is diluted upon mixing with the partial ballast water stream in a ratio of 1:500 to 1:1000 by means of the partial ballast water stream and that the partial ballast water stream treated with the acrolein is diluted in a ratio of about 1:5 to 1:10 by means of the main ballast water stream if the nominal content of the acrolein in the main ballast water stream treated with acrolein amounts to about 5 to 15 ppm and the partial ballast water stream is 10 % of the main ballast water stream.

11. Method according to claim 5, **characterized in that,** for mixing the partial ballast water stream and the acrolein solution, a mixing nozzle of the type of a water jet pump operated by the partial ballast water stream is used to the low pressure zone of which the acrolein solution and, if applicable, the disintegration accelerator is/are fed.

12. Method according to claim 5, **is characterized in that** the pressure and the flow speed of the partial ballast water stream are selected such that a water flow speed of 20 to 25 m/sec is achieved in the mixing nozzle.

## Revendications

1. Dispositif de traitement d'eau de ballast avec acroléine à bord de navires, le dispositif présentant un raccord pour une conduite principale d'eau de ballast (2) d'un dispositif à eau de ballast, comprenant :
un dispositif réacteur avec un raccord (48) pour un dérivé d'acroléine, un raccord (50) pour de l'acide catalyseur et un raccord (52) à eau pour la production d'une solution d'acroléine aqueuse,
une conduite de dérivation (10), avec la conduite principale d'eau de ballast (2), qui est reliée à la conduite principale d'eau de ballast (2) pour la dérivation d'un écoulement partiel d'eau de ballast et pour le renvoi de l'écoulement partiel d'eau de ballast dérivé,
un mélangeur (24) relié à la conduite de dérivation (10) pour diluer la solution d'acroléine aqueuse produite par le dispositif réacteur;
une conduite d'alimentation pour la solution d'acroléine aqueuse (34, 42) reliant le dispositif réacteur sur le pont du bateau au mélangeur (24) dans la conduite de dérivation (10) de la conduite principale d'eau de ballast (2), et
un dispositif d'alimentation (4) dans la conduite principale d'eau de ballast (2) pour acheminer la solution d'acroléine aqueuse du mélangeur (24) à la conduite principale d'eau de ballast (2).

2. Dispositif selon la revendication 1, **caractérisé en ce que** le dispositif réacteur comprend une génératrice (46) avec au moins une tubulure de raccordement (48) pour le dérivé d'acroléine et une tubulure de raccordement (52) pour l'eau pure ainsi qu'une tubulure d'évacuation (44) pour une solution d'acroléine, la génératrice (46) étant agencée pour le mélange préliminaire du dérivé d'acroléine avec de l'eau, et un réacteur à tuyaux (36) qui présente une tubulure d'alimentation reliée par une conduite à la tubulure d'évacuation de la génératrice (46) et une tubulure d'évacuation pour acheminer la solution d'acroléine traitée, et dont le volume est agencé pour faire en sorte que la solution d'acroléine demeure un certain temps dans le réacteur à tuyaux (36), pendant quoi le dérivé d'acroléine termine de se dissoudre dans l'eau.

3. Dispositif selon la revendication 1, **caractérisé en ce que** le mélangeur comprend : une buse de mélange (24) avec un cône d'alimentation (96) qui rétrécit dans la direction d'écoulement et qui présente une tubulure d'alimentation pour le raccordement à une conduite d'eau sous pression (22), avec un cône d'évacuation (94) qui s'élargit dans la direction d'écoulement et qui présente une tubulure d'évacuation pour le raccordement à une ligne d'alimentation (29) pour transporter la solution d'acroléine aqueuse du mélangeur à un lieu de destination, ainsi qu'avec au moins une tubulure d'aspiration (30) qui, débouchant dans une zone à dépression de la buse de mélange (24), est reliée à une conduite d'alimentation de la solution d'acroléine (34) d'un dispositif réacteur (36,46) pour la production d'une solution d'acroléine aqueuse, et une pompe de surpression (20) disposée en amont de la buse de mélange (24) et reliée à une conduite de dérivation d'eau de ballast (14,18) qui est une conduite de dérivation d'une conduite principale d'eau de ballast (2) (2) pour un écoulement partiel de l'eau de ballast, la puissance de la pompe de surpression (20) étant dimensionnée selon le rétrécissement du cône d'alimentation (96) de la buse de mélange (24) de façon à pouvoir atteindre, à la puissance nominale de la pompe de surpression (20), une vitesse d'écoulement de l'eau de 20 à 25 m/sec entre le cône d'alimentation (96) et le cône d'évacuation (94) dans la zone de la buse de mélange (24).

4. Dispositif selon la revendication 1, **caractérisé en ce que** le dispositif d'alimentation présente une buse annulaire (4) conçue pour aller dans la conduite principale d'eau de ballast (2) (2), la buse annulaire (4) présentant un anneau de buse qui présente une multitude d'ouvertures de buse (6) distribuées sur le pourtour intérieur de l'anneau de buse.

5. Procédé de traitement d'eau de ballast avec acroléine à bord de navires lors duquel un dérivé d'acroléine, un acide catalyseur et de l'eau d'hydrolyse sont mélangés dans un dispositif réacteur en vue de produire une solution d'acroléine aqueuse,
un écoulement partiel d'eau de ballast dérivé d'un flux d'eau de ballast à un point de dérivation est mélangé à la solution aqueuse d'acroléine produite dans le dispositif réacteur, ce qui en provoque la dilution,
la solution d'acroléine aqueuse produite dans le dispositif réacteur étant acheminée du dispositif réacteur à bord du navire jusqu'au mélangeur disposé dans la conduite de dérivation via une conduite d'alimentation de la solution d'acroléine aqueuse, et l'écoulement partiel d'eau de ballast traité avec la solution d'acroléine est réacheminé en aval du point de dérivation et jusqu'au flux principal d'eau de ballast via le mélangeur.

6. Procédé selon la revendication 5, **caractérisé en ce qu'**un catalyseur de craquage est ajouté au dispositif réacteur pour produire une solution d'acroléine aqueuse.

7. Procédé selon la revendication 5, **caractérisé en ce qu'**un accélérateur de décomposition est ajouté à l'écoulement partiel d'eau de ballast.

8. Procédé selon la revendication 5, **caractérisé en ce qu'**un écoulement partiel d'eau de ballast d'environ 10 % est dérivé du flux principal d'eau de ballast.

9. Procédé selon la revendication 5, **caractérisé en ce que** lorsque la teneur nominale en acroléine du flux principal d'eau de ballast traité à l'acroléine s'élève à environ 15 ppm d'acroléine et que l'écoulement partiel d'eau de ballast est égal à 10 % du flux principal d'eau de ballast, le rapport d'un déviré d'acroléine et d'eau d'hydrolyse au dispositif réacteur est choisi de façon à ce que la solution d'acroléine sortant du dispositif réacteur affiche une concentration de 150 000 ppm, et que l'écoulement partiel d'eau de ballast suite au mélange avec la solution d'acroléine affiche une concentration en acroléine de 150 ppm.

10. Procédé selon la revendication 5, **caractérisé en ce que** la solution d'acroléine qui s'écoule du dispositif réacteur lors du mélange avec l'écoulement partiel d'eau de ballast est diluée par l'écoulement partiel d'eau de ballast dans un rapport de 1:500 à 1:1000, et que l'écoulement partiel d'eau de ballast traité à l'acroléine est dilué par le flux principal d'eau de ballast dans un rapport de 1:5 à 1:10 lorsque la teneur nominale en acroléine dans l'eau de ballast traité à l'acroléine est de 5 à 15 ppm d'acroléine et que l'écoulement partiel d'eau de ballast est égal à 10 % du flux principal d'eau de ballast.

11. Procédé selon la revendication 5, **caractérisé en ce qu'**une buse de mélange du type d'une trompe à eau, dans la zone de dépression de laquelle la solution d'acroléine et, le cas échéant, l'accélérateur de décomposition est introduit, activée par l'écoulement partiel d'eau de ballast est utilisée pour le mélange de l'écoulement partiel d'eau de ballast et de la solution d'acroléine.

12. Procédé selon la revendication 5, **caractérisé en ce que** la pression et la vitesse de circulation de l'écoulement partiel d'eau de ballast sont choisies de façon à atteindre dans la buse de mélange une vitesse de circulation de l'eau de 20 à 25 m/sec.
